**Europäisches Patentamt**

**European Patent Office**

**Office européen des brevets**

(11) Veröffentlichungsnummer: **0 112 461**
A1

## (12) EUROPÄISCHE PATENTANMELDUNG

(21) Anmeldenummer: 83110695.0

(22) Anmeldetag: 26.10.83

(51) Int. Cl.³: **G 06 K 19/06**

(30) Priorität: 26.11.82 DE 3243758

(43) Veröffentlichungstag der Anmeldung: 04.07.84
Patentblatt 84/27

(84) Benannte Vertragsstaaten: **AT BE CH FR GB IT LI NL SE**

(71) Anmelder: **BROWN, BOVERI & CIE Aktiengesellschaft, Kallstadter Strasse 1, D-6800 Mannheim 31 (DE)**

(72) Erfinder: **Strietzel, Rainer, Im Schnepfengrund 8, D-6900 Heidelberg 1 (DE)**

(74) Vertreter: **Kempe, Wolfgang, Dr. et al, c/o Brown, Boveri & Cie AG Postfach 351, D-6800 Mannheim 1 (DE)**

(54) **Verfahren zum Erhöhen der Fälschungssicherheit einer Identitätskarte.**

(57) Eine Identitätskarte (1) enthält eine Halbleiterschaltung (12) mit einem Speicher, der aus- und einlesbare Daten speichert, sowie Hoch- oder Höchstfrequenzantennen (5, 11), eine Gleichrichterschaltung (6) und einen Sender (11). Nach Fertigstellung der Karte (1) werden die Reflexionseigenschaften und die elektrischen Parameter der Antenne(n) (5, 11) ermittelt und in eine Codezahl umgerechnet. Diese Codezahl wird als individuelle Kennziffer dauerhaft im Speicher gespeichert.

0112461

BROWN , BOVERI & CIE   AKTIENGESELLSCHAFT
Mannheim                                    24. Nov. 1982
Mp.-Nr. 675/82                              ZPT/P3-Bi/Bt

Verfahren zum Erhöhen der Fälschungssicherheit einer
Identitätskarte

Die Erfindung betrifft ein Verfahren zum Erhöhen der
Fälschungssicherheit einer Identitätskarte nach dem
Oberbegriff des Patentanspruchs 1.

Eine derartige kontaktlose, wartungsfreie elektronische
Identitätskarte ist in der älteren deutschen Patentanmeldung P 31 43 915.3 vorgeschlagen. Diese Karte enthält
eine geschützt eingesetzte Halbleiterschaltung, die sowohl mit elektrischer Versorgungsenergie als auch mit
Daten gespeist wird, sobald sie in das Strahlungsfeld
eines entsprechenden Schreib-Lesegerätes gelangt. Die
äußeren Abmessungen derartiger Identitätskarten begrenzen die Größe der Hochfrequenzbauteile, insbesondere der
Antennen. Aus diesem Grund werden Frequenzen im Mikrowellenbereich angewendet. Für derartige Frequenzbereiche
hat sich die Streifenleitungstechnik bewährt, und zwar
sowohl als sogenannte Mikrostrip-Technik als auch als
Mikroslot-Technik.

675/82          2      0112461

Beispielsweise aus der Publikation "NTG-Fachberichte", Bd. 78: "Antennen'82", Seiten 46 bis 51 sind Aufbau und Eigenschaften verschiedener Mikrowellenantennenformen bekannt. Daraus geht hervor, daß für Streifenleitungsantennen die Kosten gering sind, die Bandbreite sehr schmal ist, und die Anforderungen an die Genauigkeit der Herstellung sehr hoch sind. Es hat sich in der Praxis gezeigt, daß bei einer Serienfertigung derartiger Streifenleitungsantennen sowohl die Maxima als auch die Bandbreiten der Resonanzkurven relativ stark streuen. Aus diesem Grund wird üblicherweise ein Geometrieabgleich, beispielsweise mittels Laser, vorgenommen. Diese Einzelbehandlung jedes Antennenexemplars bedeutet verständlicherweise einen erhöhten Aufwand in der Produktion.

In der älteren deutschen Patentanmeldung P 32 32 436.7 ist ein Verfahren beschrieben, welches es erlaubt, kontaktlose, wartungsfreie elektronische Identitätskarten zu betreiben, ohne daß die Antennen einen derartigen Geometrieabgleich benötigen. Zu diesem Zweck wird nach einem bestimmten Verfahren die Frequenz von Energie- und Datensignal an die tatsächlichen elektrischen Parameter jeder einzelnen Antenne angepaßt.

Der vorliegenden Erfindung liegt die Aufgabe zugrunde, ein Verfahren anzugeben, mit dem die Sicherheit einer derartigen Identitätskarte gegen Fälschungen usw. wesentlich erhöht werden kann.

Diese Aufgabe wird erfindungsgemäß durch die kennzeichnenden Merkmale des Patentanspruchs 1 gelöst.

Bei der erfindungsgemäßen Bildung des Echtheitsmerkmals werden beispielsweise die bisher unerwünschten Fertigungstoleranzen der Antennen, insbesondere die von der Sollfrequenz mehr oder weniger abweichende tatsächliche Resonanzfrequenz sowie die sonstigen elektrischen Parameter bewußt ausgewertet. Die übrigen Parameter der Antenne werden durch die in der Indentitätskarte eingebaute Rücksendeeinrichtung beeinflußt, welche auf die Reflexionseigenschaften der Antenne, insbesondere auf deren Phase und Betrag einwirkt.

Zur Bildung der für jede Identitätskarte individuellen Codezahl werden beispielsweise die Resonanzfrequenz der Antenne sowie Amplitude und Phasenverschiebung der zurückgesendeten Welle gemessen und in entsprechende Zahlenwerte umgewandelt. Diese Zahlenwerte werden untereinander und gegebenenfalls mit einer geheimzuhaltenden Schlüsselzahl verknüpft. Ergebnis dieses Verknüpfungsvorgangs ist eine Codezahl, die die von außen meßbaren elektrischen Eigenschaften der Identitätskarte enthält. Durch späteres Auslesen dieser Codezahl und Vergleich mit aktuell gemessenen elektrischen Parametern ist es jederzeit möglich, die Echtheit zu überprüfen. Andererseits ist es für einen Fälscher nicht möglich, den Bildungsalgorithmus für diese Codezahl zu entschlüsseln, selbst wenn es ihm gelingt, die individuelle Codezahl auszulesen, da jede Identitätskarte eine andere, eben individuelle Codezahl besitzt.

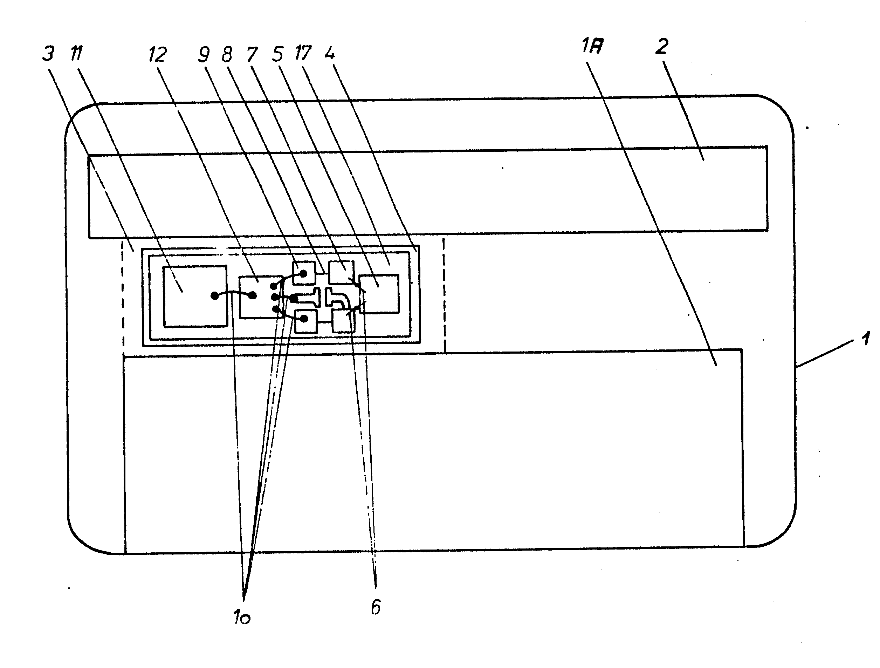

Anhand der Zeichnung soll eine Anwendungsmöglichkeit der Erfindung näher erläutert werden.

Die Zeichnung zeigt eine Karte 1, die in Größe und Aufmachung einer Scheckkarte entspricht. Sie enthält eine Prägezone 1A, in der Daten optisch lesbar dargestellt sind, und ein Feld 2, auf dessen Rückseite ein Magnetstreifen angebracht ist. Ein weiteres Feld 3 ist mit abgenommener Deckschicht dargestellt, so daß man die hier eingebettete Elektronik erkennen kann. Man erkennt eine ganzflächige Rückseitenmetallisierung 4, die sich unter einem hochfrequenzgeeigneten Dielektrikum 17, z.B.
Aluminiumoxid oder Polytetrafluoräthylen befindet. In
einer Aussparung im Feld 3 befindet sich eine integrierte Halbleiterschaltung 12, die mittels Bond-Drähten 10
mit den übrigen Schaltungskomponenten verbunden ist.
Über der Rückseitenmetallisierung 4 befindet sich auf
dem Dielektrikum 17 eine Empfangsantenne 5 in Form einer
rechteckigen Metallfläche. Von der Empfangsantenne 5
sind zwei Dioden 6 zu weiteren Metallflächen 7 geschaltet. Die Metallflächen 7 sind über eine Leiterverbindung
8 mit weiteren Metallflächen 9 verbunden, von denen
Bond-Drähte 10 zur Halbleiterschaltung 12 geführt sind.
Am Ausgang der Halbleiterschaltung 12 liegt eine Mikrowellen-Sendeantenne 11, ebenfalls in Form einer metallisierten Fläche. Es ist jedoch grundsätzlich möglich,
beide Antennen 5, 11 zu kombinieren und sowohl zum Senden als auch zum Empfangen zu verwenden.

Die Fertigungstoleranzen der Antennen 5, 11 sowie der
Halbleiterschaltung 12 als auch der Gleichrichterschaltung 6 beeinflussen naturgemäß die Empfangs- und Sendeeigenschaften der Antennen. Durch Messen dieser Eigenschaften von einem Abfragegerät aus und durch eine Verknüpfung der Meßwerte nach einem geheimzuhaltenden Algorithmus bzw. mit einem geheimzuhaltenden Schlüsselwort
ergibt sich eine Codezahl, die bei der Herstellung dauerhaft in die Halbleiterschaltung 12 eingespeichert wird,
und die dann jederzeit wieder ausgelesen werden kann.
Diese Codezahl ist für jede Identitätskarte verschieden
und kann mit dem Fingerabdruck eines Menschen verglichen
werden. Werden zu einem späteren Zeitpunkt die elektrischen Eigenschaften der Antenne neu gemessen, so muß
sich bei Anwendung des vereinbarten Algorithmus dieselbe
Codezahl ergeben, wie sie in der Karte eingespeichert
ist. Eine Abweichung der Codezahlen läßt dann mit hoher
Wahrscheinlichkeit auf eine Fälschung oder einen Manipu-

675/82 5 0112461

lationsversuch schließen.

<u>A n s p r ü c h e</u>

1. Verfahren zum Erhöhen der Fälschungssicherheit einer Identitätskarte (1), die eine Halbleiterschaltung (12) mit einem Speicher für aus- und einlesbare Daten und mindestens eine Hoch- oder Höchstfrequenzantenne (5,11) zum Senden und/oder Empfangen der Daten aufweist, <u>dadurch gekennzeichnet,</u> daß nach Fertigstellung der Karte (1) kartenspezifische elektrische Eigenschaften ermittelt und nach einem geheimzuhaltenden Algorithmus unter Bildung einer Codezahl miteinander verknüpft werden und daß anschließend diese Codezahl in den Speicher (4) dauerhaft eingespeichert wird.

2. Verfahren nach Anspruch 1, dadurch gekennzeichnet, daß als kartenspezifische elektrische Eigenschaft die Reflexionseigenschaft der Antenne (5,11), insbesondere ihre von einer Sollfrequenz abweichende Resonanzfrequenz, und/oder der von einem Sollwert in Phase und Betrag abweichende Reflexionswert gewählt wird.

3 11 12 9 8 7 5 17 4 1A 2

1

10 6

0112461

# EUROPÄISCHER RECHERCHENBERICHT

**Europäisches Patentamt**

0112461

EP 83 11 0695

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 474 204 (TRANSAC)<br>* Figuren 1-3; Seite 4, Zeilen 12-34; Seite 6, Zeilen 19-39 * | 1 | G 06 K 19/06 |
| | --- | | |
| Y | WO-A-8 200 062 (LIGHT SIGNATURES)<br>* Zusammenfassung; Figuren 1-3; Seite 6, Zeile 34 - Seite 10, Zeile 25 * | 1 | |
| | --- | | |
| Y | DE-A-2 443 967 (MANNESMANN)<br>* Seite 2, Zeile 5 - Seite 3, letzte Zeile * | 1 | |
| | --- | | |
| A | DE-A-1 931 536 (SAAB)<br>* Anspruch 1; Seite 14, Zeilen 15-25 * | 1 | RECHERCHIERTE SACHGEBIETE (Int. Cl. ³) |
| | --- | | |
| A | DE-A-3 016 698 (BEKAERT)<br>* Ansprüche 1,2 * | 2 | G 06 K 19/06<br>G 06 K 19/08 |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 09-03-1984 | FORLEN G.A. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

BAD ORIGINAL